# EUROPEAN PATENT SPECIFICATION

(11) **EP 4 310 509 B1**
(45) Date of publication and mention of the grant of the patent: **09.12.2026**
(21) Application number: 22771100.9
(22) Date of filing: 01.03.2022
(51) Int. Cl.: G01N 35/02, G01N 21/25, G01N 21/31, G01N 35/00, G01N 35/10, G01N 21/78

(54) **AUTOMATIC ANALYSIS DEVICE**
AUTOMATISCHE ANALYSEVORRICHTUNG
DISPOSITIF D'ANALYSE AUTOMATIQUE

(30) Priority: 16.03.2021 JP 2021042213
(43) Date of publication of application: 24.01.2024
(73) Proprietor: HITACHI HIGH-TECH CORPORATION, Tokyo 105-6409 (JP)
(72) Inventor: HORIKAWA, Hiroshi, Tokyo 105-6409 (JP); FUKAYA, Masashi, Tokyo 105-6409 (JP)
(74) Representative: MERH-IP Matias Erny Reichl Hoffmann Patentanwälte PartG mbB
(86) International application number: PCT/JP2022/008632
(87) International publication number: WO 2022/196346

(56) References cited:
- WO-A1-2019/204841
- CN-A- 112 041 076
- JP-A- 2007 127 583
- JP-A- 2007 127 583
- JP-A- 2007 171 186
- JP-A- 2011 237 384
- JP-A- 2015 010 986
- JP-A- 2020 503 508
- JP-A- H11 145 542
- US-A1- 2005 285 129
- US-A1- 2019 201 047

## Description

### Technical Field

The present invention relates to an automatic analyzer.

### Background Art

In an automatic analyzer that analyzes a sample such as blood, a light source is one of important components that affect analysis performance. Light emitted from the light source transmits through a reaction liquid where a reagent and a sample are mixed, is dispersed into a specific number of wavelengths by a spectroscope, and is detected by a detector. In the related art, a halogen lamp has been used as the light source. However, an automatic analyzer where an LED is used as a new light source has been proposed. For example, PTL 1 discloses a configuration where a plurality of LED light sources having different wavelengths are sequentially controlled to emit light periodically during measurement (analysis) and a configuration where, even during non-measurement such as a stand-by state, the plurality of LED light sources are sequentially controlled to emit light periodically to remove a variation in light quantity (for example, paragraph 0093). In addition, PTL 1 also discloses a configuration in which an LED light source having a shorter wavelength does not emit light during the non-measurement because a period of time required to stabilize the light quantity is shorter than that of LED light sources having the other wavelengths (for example, paragraph 0094). Furthermore, PTL 2 discloses LED excitation modules and calibration methods for fluorescence imaging instruments, wherein the system of PTL 2 uses arrays of LEDs arranged in linear modules with reflectors and tubular sections to provide uniform illumination for microplate imaging and includes photodiodes for monitoring LED output and calibration methods (source normalization, flat fielding, background subtraction) to correct for LED spectrum variations and intensity fluctuations.

PTL 3 discloses an automated analyzer with a light source control system, wherein the analyzer includes stability monitoring and only begins measurements when the light source output is stable, thereby extending lamp life. A power control circuit controls the voltage supplied to the light source and switches between a measurement voltage, a first standby voltage and a second standby voltage according to the operating state of the analyzer. After completion of measurement, the analyzer may enter a post-measurement cleaning operation, during which the light source is supplied with the second standby voltage, exemplified as about 80% of the measurement voltage. After completion of the post-measurement cleaning operation, the analyzer enters a second standby state, in which the same second standby voltage is maintained, such that the 80% voltage level is applied both during post-measurement cleaning and during the subsequent second standby state.

PTL 4 discloses adaptive control systems for surgical instruments, particularly ultrasonic surgical devices, wherein the systems are using impedance measurements of the ultrasonic transducer to identify tissue types, characterize tissue states, and automatically adjust operating parameters (power, temperature, compression force) during procedures. PTL 5 discloses a wavelength-stabilized 1.5µm laser source for WDM optical communications, which is using a second harmonic generator (SHG) module with a rubidium absorption cell (87Rb) for wavelength stabilization. Overall, the system includes a laser diode module, fiber-coupled components, temperature-controlled SHG crystal, and phase-locked loop control. Eventually, PTL 6 discloses an automated analyzer with a fixed linear cuvette array and independently movable components, wherein this analyzer is provided with stationary cuvettes with dedicated optical measurement systems for each cuvette, multiple pipetting modules that can move independently along X/Y axes, integrated ultrasonic mixing and temperature control system combining Peltier elements with ultrasonic transducers, and a modular optical system using LED arrays and light distribution chambers for multi-wavelength measurements.

### Citation List

### Patent Literature

PTL 1: JP 2017 - 156 105 A
PTL 2: US 2005 / 285 129 A1
PTL 3: JP 2007 - 127 583 A
PTL 4: US 2019 / 201 047 A1
PTL 5: JP H11 - 145 542 A
PTL 6: CN 112 041 076 A

### Summary of Invention

### Technical Problem

In the technique described in PTL 1, not only during the measurement but also during the non-measurement, the plurality of light sources are caused to emit light basically under the same control. Therefore, the current quantity to be supplied to the light source during the non-measurement is excessive, which may reduce the lifetime of the light source. In addition, in the technique described in PTL 1, a part of the light sources are completely turned off during the non-measurement. Therefore, during transition from the non-measurement to the measurement, the stabilization of the light sources is too late, which may affect the measurement result.

An object of the present invention is to provide an automatic analyzer that stabilizes the light quantity before measurement in a short period of time while increasing the lifetime of a light source. Solution to Problem

The invention is defined with appended independent device claim 1. Preferable embodiments are defined in the dependent claims.

### Advantageous Effects of Invention

The present invention provides an automatic analyzer as defined with claim 1 and which may stabilize the light quantity before measurement in a short period of time while increasing the lifetime of a light source.

### Brief Description of Drawings

Fig. 1 illustrates an overall structure of an automatic analyzer according to an embodiment.
Fig. 2 illustrates an exemplary module connection in the automatic analyzer according to the embodiment.
Fig. 3 illustrates an optical system and peripherally disposed devices, which are employed for the automatic analyzer according to the embodiment.
Fig. 4 is a graph indicating change in the value of current supplied by a current adjustment section according to a first example to a light source after start of analysis.
Fig. 5 is a flowchart representing the process to be executed from activation of the automatic analyzer according to the first example until transition to a rack reception mode.
Fig. 6 is a flowchart representing the process to be executed in the rack reception mode immediately after the end of analysis of the automatic analyzer according to the first example.
Fig. 7A is a graph indicating change in the value of current supplied by the current adjustment section to the light source from the power-OFF state of the automatic analyzer according to the first example.
Fig. 7B is a graph indicating change in light quantity from the power-OFF state of the automatic analyzer according to the first example.
Fig. 8 is a flowchart representing the process for monitoring light quantity in the first example.
Fig. 9A is a graph indicating change in the value of current to be supplied by the current adjustment section according to a second example to the light source.
Fig. 9B is a graph indicating change in each value of current supplied by the current adjustment section according to the second example to LED elements A and B.

### Description of Embodiments

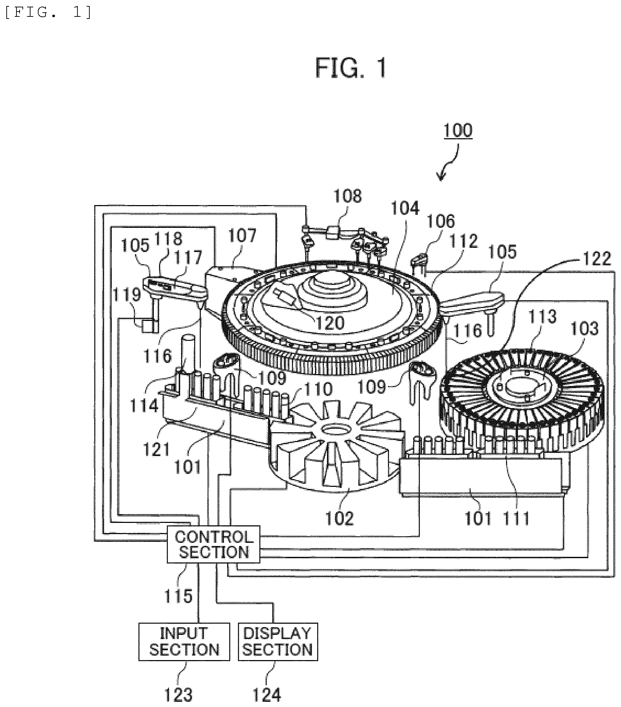

Hereinafter, a configuration and an operation of an automatic analyzer 100 according to an embodiment of the present invention will be described using Figs. 1 to 3. The automatic analyzer 100 executes colorimetric analysis using a biochemical reaction as described below.

First, an overall configuration of the automatic analyzer 100 according to the embodiment will be described using Fig. 1. Fig. 1 is an overall configuration diagram illustrating the automatic analyzer 100 according to the embodiment. The automatic analyzer 100 includes a transport line 101, a rotor 102, a reagent disc 103, a reaction disc 104, a dispensing mechanism 105, a stirring mechanism 106, a spectroscope 107, a reaction cell cleaning mechanism 108, a nozzle cleaning mechanism 109, a control section 115, an input section 123, a display section 124, and the like.

The transport line 101 transports a sample rack 111 that holds sample vessels 110 containing a sample to a sample dispensing position 121 by a necessary amount. The dispensing mechanism 105 dispenses the sample from the sample vessel 110 into a reaction cell 112 (reaction vessel) at the sample dispensing position 121. The transport line 101 is further connected to the rotor 102. The rotor 102 rotates such that the sample rack 111 exchanges with another one in another transport line 101.

The reagent disc 103 holds reagent vessels 113 containing a reagent and rotates and transports each of the reagent vessels 113 to a position where the dispensing mechanism 105 can execute a dispensing operation. The dispensing mechanism 105 dispenses the reagent from the reagent vessel 113 to the reaction cell 112 at a reagent dispensing position 122. A necessary amount of the reagent for the colorimetric analysis is dispensed into the reaction cell 112 and reacts with a component as an analysis target in the sample.

The reaction disc 104 holds the reaction cells 112 and rotates and transports the reaction cell 112 as an operation target to an operation position indicating a position where each of the spectroscope 107, the stirring mechanism 106, the reaction cell cleaning mechanism 108 and the like that execute the colorimetric analysis operates. The reaction cell 112 is kept warm by a constant-temperature medium such as water. As a result, in a reaction liquid as a mixture of the sample and the reagent, a chemical reaction of the component in the sample and the reagent is promoted.

The dispensing mechanism 105 aspirates the sample for the colorimetric analysis from the sample vessel 110 and discharges the sample to the reaction cell 112. The dispensing mechanism 105 aspirates the reagent corresponding to the analysis target from the reagent vessel 113 and discharges the reagent to the reaction cell 112. The dispensing mechanism 105 includes an arm 118, a nozzle 116, and a motor 119 for dispensing mechanism. The arm 118 holds the nozzle 116 and a liquid level sensor 117. The nozzle 116 is connected to the liquid level sensor 117. The liquid level sensor 117 detects whether liquid is present using a change in capacitance. In the vicinity of the position where the dispensing mechanism 105 executes the dispensing operation, a shield portion 114 is provided. The motor 119 for dispensing mechanism moves the dispensing mechanism 105 in an up-down direction or in a rotation direction.

The stirring mechanism 106 stirs the reaction liquid in the reaction cell 112 to promote the reaction of the analysis target component in the sample discharged from the sample vessel 110 into the reaction cell 112 and the reagent discharged from the reagent vessel 113 into the reaction cell 112.

A light source 120 emits output light to the reaction liquid that is stirred by the stirring mechanism 106 such that the chemical reaction occurs. The spectroscope 107 disperses the transmitted light having transmitted through the reaction liquid. The colorimetric analysis is executed by absorbance measurement based on the dispersed transmitted light.

The reaction cell cleaning mechanism 108 aspirates the reaction liquid from the reaction cell 112 after completion of the colorimetric analysis. A detergent or the like is discharged into the reaction cell 112 to clean the reaction cell 112.

The nozzle cleaning mechanism 109 cleans a tip of the nozzle 116 of the dispensing mechanism 105 that dispenses the sample or the reagent. As a result, residues attached to the nozzle 116 are removed and do not affect the next analysis target. The control section 115 is configured by a processor, a memory, and the like and controls each of the mechanisms, the devices, and the like.

The input section 123 is configured by a keyboard, a mouse, a touch panel, and the like and inputs an instruction from a user to the control section 115. The display section 124 is configured by LCD (liquid Crystal Display) or the like and displays an operation screen or the like.

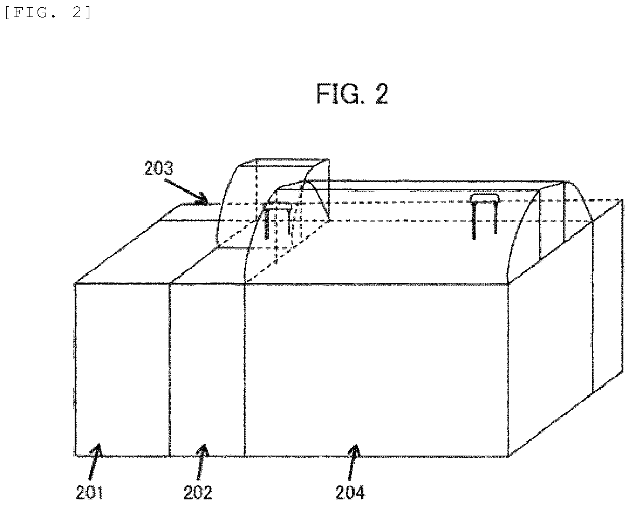

Next, a module connection example of the automatic analyzer 100 according to the embodiment will be described. Fig. 2 is a diagram illustrating the module connection example of the automatic analyzer 100 according to the embodiment. The automatic analyzer 100 includes a loading/storage section 201, an ISE section 202 (electrolyte measurement section), a sample transport section 203, and a colorimetric analysis section 204.

The loading/storage section 201 is used for loading and storing the sample rack 111. The sample rack 111 loaded to the loading/storage section 201 is moved to the sample transport section 203.

Next, the sample rack 111 is transported to the ISE section 202 through the rotor 102 (not illustrated in Fig. 2). In the ISE section 202, only an item for which the light source 120 is not used is measured. After the measurement, the sample rack 111 returns to the sample transport section 203 through the rotor 102. The sample rack 111 returned to the sample transport section 203 is transported to the sample dispensing position 121 of the colorimetric analysis section 204.

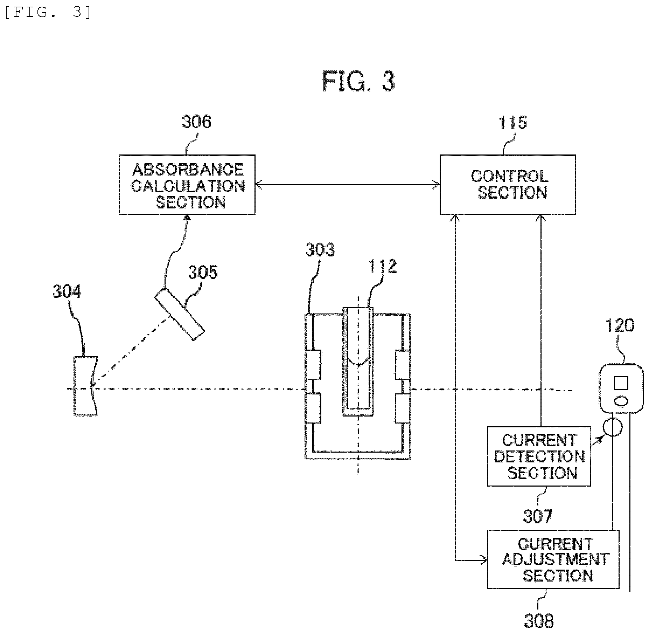

After cleaning the reaction cell 112 and executing cell blank measurement, the dispensing mechanism 105 executes the dispensing operation. Next, the colorimetric analysis section 204 executes colorimetric analysis using the light source 120. The details of the cell blank measurement will be described below using Fig. 3.

Next, an optical system that is used in the automatic analyzer 100 according to the embodiment and devices disposed around the optical system will be described using Fig. 3. Fig. 3 is a diagram illustrating the optical system that is used in the automatic analyzer 100 according to the embodiment and the devices disposed around the optical system.

First, the light source 120 is configured by two or more LED elements having different wavelengths. In automatic biochemical analysis, a plurality of measurement items are present, wavelengths of light used in the measurement items are different from each other, and light having 12 wavelengths in a wavelength range of 340 to 800 nm is used for the measurement. A halogen lamp that has been used in the related art can output light having 12 wavelengths using one unit. However, when LED elements are used, it is necessary to use two or more LED elements that can output light having different wavelengths. Current values supplied to the LED elements are individually set.

During the operation of the reaction disc 104, light from the light source 120 is emitted to the reaction cell 112 that is passing through a photometric position between the light source 120 and a diffraction grating 304. In the mixed liquid in the reaction cell 112, a measurement item component in the sample to be tested reacts with the reagent such that a photometry target material is produced or consumed in proportion to the concentration of the measurement item component. Reaction container water (constant-temperature medium) is present between a reaction container 303 and the reaction cell 112.

In the light emitted to the mixed liquid, light having a wavelength in an absorption range corresponding to the photometry target material is absorbed by the photometry target material. Light transmitted through the reaction liquid is incident on the diffraction grating 304 having a recessed shape. The diffraction grating 304 disperses the incident light for each of the wavelengths and outputs the dispersed light to an optical detector 305. The optical detector 305 converts the light quantity into an electric signal and outputs the electric signal to an absorbance calculation section 306. The absorbance calculation section 306 calculates an absorbance based on the electric signal output from the optical detector 305 and outputs the calculated absorbance to the control section 115. The control section 115 executes colorimetric analysis based on the absorbance output from the absorbance calculation section 306.

When the colorimetric analysis is executed, cell blank water is dispensed into all of the reaction cells 112, and an absorbance of the light having each of the wavelengths in the range of 340 to 800 nm is measured (cell blank measurement). The control section 115 holds(stores) the measurement result as a cell blank value. The control section 115 compares the cell blank value and the absorbance of the mixed liquid as the analysis target to each other to correct the absorbance, and outputs the corrected absorbance to an user interface (a screen or the like displayed by the display section 124) as measurement data.

A current detection section 307 monitors (measures) a current flowing through the light source 120. A current adjustment section 308 includes a circuit that decreases a current quantity to be supplied to the light source 120 or turns off the power of the light source 120 at a timing when there is no effect on the analysis.

Here, when the light source 120 is restored to a measurement light quantity during the analysis from the power-OFF state, the automatic analyzer has a large problem in that a period of time of about 5 minutes is required to stabilize the light quantity. Accordingly, the automatic analyzer 100 according to the embodiment has a function of maintaining an idle state such that the light source 120 can be immediately shifted to the measurement light quantity during the analysis by adjusting the current supplied to the light source 120 in the current adjustment section 308 and continuing a control of supplying a low current or a pulse control without completely turning off the light source 120.

### First Example

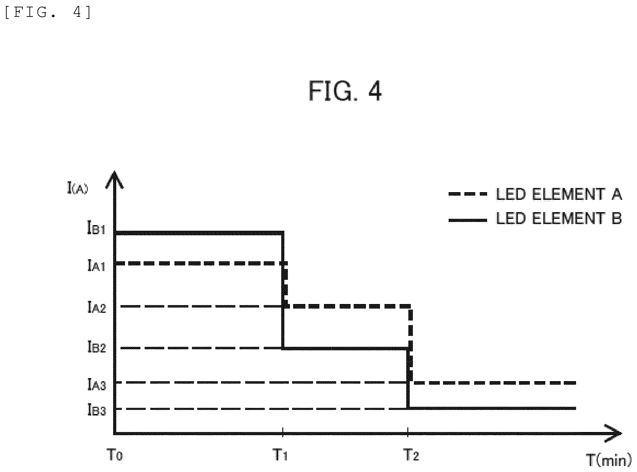

A first example is an example where, when the light source 120 is in the idle state, the current adjustment section 308 executes a control of supplying a low current (setting the current to a value reduced from the current quantity in an analytical state). Fig. 4 is a graph illustrating a change in the current value supplied from the current adjustment section 308 according to the first example to the light source 120 after the start of the analysis.

As illustrated in Fig. 4, first, the automatic analyzer 100 is in a measurement state (measurement mode) in a period from time T₀ to time T₁, and transitions to a rack reception mode from the time T₁.

Here, in the example, as a stand-by mode that is a stand-by state, a first stand-by mode and a second stand-by mode where the automatic analyzer 100 is shiftable to an analytical state in a shorter period of time than that in the first stand-by mode are present. The first stand-by mode is a sleep mode in which not only the dispensing mechanism 105 but also the cleaning mechanism and the reaction disc 104 are stopped. The second stand-by mode is the rack reception mode in which the dispensing mechanism 105 is stopped while the cleaning mechanism and the reaction disc 104 are not stopped. Accordingly, in the rack reception mode, when a measurement request is received from a user, the automatic analyzer 100 can be shifted to the measurement by skipping a pre-analysis preparation operation.

In addition, in the example, two LED elements are used as the light source 120. In an LED element A, when a measurement current value (first current value) is supplied from the power-OFF state, a period of time required to stabilize the light quantity during the measurement is longer than that of an LED element B. For example, the LED element A emits visible light, and the LED element B emits ultraviolet light having a shorter wavelength than the LED element A. Accordingly, when the automatic analyzer 100 transitions to the rack reception mode (the second stand-by mode) at the time T₁, a reduction ratio from a measurement current value I_{A1} of the LED element A to a current value I_{A2} (fourth current value) in the idle state is set to be smaller than a reduction ratio from a measurement current value I_{B1} of the LED element B to a current value I_{B2} (fourth current value) in the idle state. As a result, when the automatic analyzer 100 transitions to the measurement mode, two kinds of LED elements having different stabilization periods can be stabilized at the same timing.

Next, at time T₂, the automatic analyzer 100 stops the analysis operation and transitions to the sleep mode (first stand-by mode). At this time, the current values supplied to the LED elements are changed to idle current values (second current values) I_{A3} and I_{B3} used in the sleep mode, respectively. Reduction ratios of the values I_{A3} and I_{B3} from the measurement current values I_{A1} and I_{B1} are set to be larger than the reduction ratios of the values I_{A2} and I_{B2} from the measurement current values I_{A1} and I_{B1}, respectively. In the sleep mode, the measurement operation of the automatic analyzer 100 is stopped as described above. Therefore, a period of time required to shift the automatic analyzer 100 to the measurement state in response to an execution instruction from a user is longer than that in the rack reception mode. As a result, in the sleep mode, a time margin until the light source 120 is stabilized is longer than that in the rack reception mode. Therefore, the reduction ratio of the current value can be set to be large, and a load on the power consumption or the lifetime of the LED element in the stand-by state can be reduced. Due to the above-described control, in the automatic analyzer 100 according to the example, the lifetime of the light source 120 can be increased while stabilizing the light quantity before measurement in a short period of time.

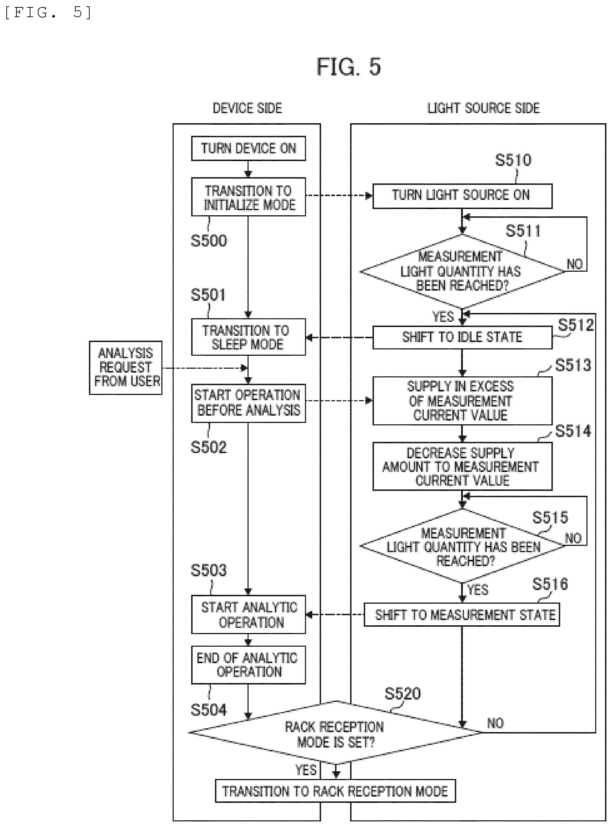

Next, a process during the activation of the automatic analyzer 100 according to the example will be described using Fig. 5. Fig. 5 is a flowchart illustrating the process from the activation of the automatic analyzer 100 according to the first example to the transition to the rack reception mode.

First, when the user starts the automatic analyzer 100 (when the power of the automatic analyzer 100 is turned on), the control section 115 executes an initialize mode (Step S500) and activates the light source 120 at the same time (Step S510). In the initialize mode, necessary minimum initialization and measurement are prepared. The operation in the initialize mode includes a reset operation of the dispensing mechanism 105 and the cell blank measurement. In the initialize mode, the control section 115 lights the light source 120 by causing a current to flow in a quantity used for the measurement (by supplying the measurement current value). Even in the initialize mode where the measurement is not executed, the light source 120 is lighted at the same level of current quantity as that in the measurement mode. Therefore, the LED elements are warmed, and the light quantity can be stabilized during the initialize mode. At this time, whether the light quantity reaches the value during the measurement is monitored (Step S511). The detailed process of the light quantity monitoring will be described below. When the light quantity reaches the value during the measurement, the initialize mode ends.

When there is no analysis request or the like after the end of the initialize mode, the control section 115 transitions to the sleep mode (Step S501), and the light source 120 is shifted to the idle state at the same time (Step S512). In the idle state (non-analytical state), the current adjustment section 308 individually sets the current quantity of each of the LED elements to a value reduced from the current quantity during the measurement (analytical state). Specifically, the current adjustment section 308 sets the reduction ratio of the current quantity of the LED element B having a shorter wavelength to be larger than the reduction ratio of the current quantity of the LED element A having a longer wavelength.

Next, the user inputs an analysis request (execution instruction of the measurement) using the input section 123. The control section 115 starts a pre-colorimetric analysis operation in response to the analysis request from the user (Step S502), and supplies a current exceeding the measurement current value to the light source 120 (Step S513). In the pre-analysis operation, the rack transport, the cell blank measurement, and the like are executed. When a predetermined time (for example, about 60 seconds) elapses from the supply of the current exceeding the measurement current value, the control section 115 decreases the current quantity to the measurement current value (Step S514), and monitors again whether the light quantity reaches the value during the measurement (Step S515). When the light quantity reaches the value during the measurement, the light source 120 is shifted to the measurement state (Step S516), and the control section 115 starts the analysis operation (measurement mode) (Step S503). In the measurement mode, the colorimetric analysis section 204 executes the analysis (measurement) based on the light emitted to the reaction cell 112. When the analysis ends (Step S504), the control section 115 determines whether the rack reception mode is set (Step S520). when the rack reception mode is set, the automatic analyzer 100 transitions to the rack reception mode. Here, in the rack reception mode, a period of time required for the shift to the analytical state in response to the analysis request in the mode is shorter than that in the typical stand-by mode (sleep mode), and a time margin until the light source 120 is stabilized is short. Therefore, the reduction ratio of the current quantity supplied to the light source 120 is set to be smaller than that in the typical idle state.

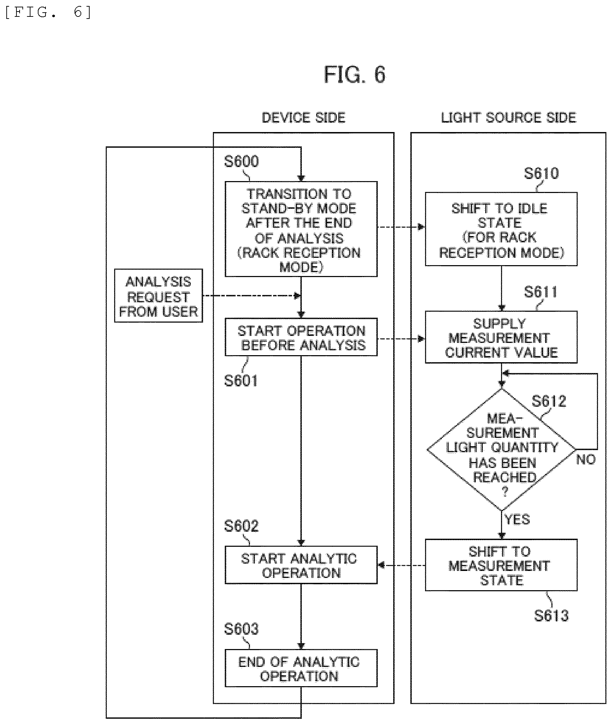

Next, a process in the rack reception mode that is executed immediately after the end of the analysis of the automatic analyzer 100 according to the example will be described using Fig. 6. Fig. 6 is a flowchart illustrating the process in the rack reception mode immediately after the end of the analysis of the automatic analyzer 100 according to the first example. The user can select whether to enable/disable the rack reception mode.

First, the control section 115 transitions the automatic analyzer 100 to the rack reception mode (Step S600), and also shifts the light source 120 to the idle state (Step S610). When there is an analysis request from the user in the rack reception mode, the control section 115 causes the automatic analyzer 100 to start the pre-analysis operation (Step S601), and supplies the measurement current value to the light source 120 (Step S611). Next, the control section 115 monitors whether the quantity of the light from the light source 120 reaches the light quantity during the measurement (Step S612). When the quantity of the light from the light source 120 reaches the light quantity during the measurement, the control section 115 shifts the light source 120 to the measurement state (Step S613), and causes the automatic analyzer 100 to start the analysis operation (Step S602). Next, when the analysis ends (Step S603), the control section 115 transitions from the measurement mode to the rack reception mode again (Step S600).

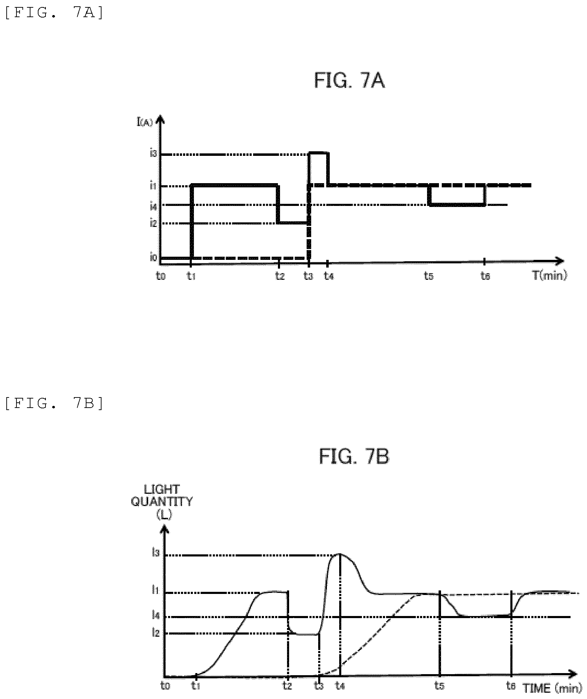

Next, an overall change in the current quantity to be supplied to the light source 120 of the automatic analyzer 100 according to the example will be described in detail using Fig. 7A. Fig. 7A is a graph illustrating a change in the current value supplied from the current adjustment section 308 to the light source 120 from the power-OFF state of the automatic analyzer 100 according to the first example. In Fig. 7A, the vertical axis represents the current I to be supplied to the light source 120, and the horizontal axis represents the time T. In addition, in Fig. 7A, a solid line represents a change when the light source is shifted to the idle state in advance before the start of the measurement as in the example, and a broken line represents a change when the power of the light source is turned off until the start of the measurement as a comparative example.

As illustrated in Fig. 7A, a time when the power of the automatic analyzer 100 is turned on is set to time t0. At time t1 when the initialize mode starts, the current adjustment section 308 sets the current quantity to be supplied to the light source 120 to the measurement current value (first current value) i1. Next, at time t2 when the initialize mode ends, the current adjustment section 308 decreases the current quantity to a second current value i2 used in the idle state. The reduction ratio of the current quantity may be set to vary depending on the LED elements (for example, the LED element A is 50%, and the LED element B is 30%). A period from the time t2 to time t3 corresponds to the sleep mode, but the duration of the sleep mode varies depending on the usage state of the automatic analyzer 100. In the period of the sleep mode, the current quantity supplied to the light source 120 is maintained at the second current value i2 of the idle state.

Next, at the time t3 when the pre-analysis operation starts, the current adjustment section 308 sets the current quantity to be supplied to the light source 120 to a current value (third current value) i3 higher than the measurement current value. As a result, the temperature of the LED element increases, and a period of time required to stabilize the light quantity is reduced. Further, at time t4, the current adjustment section 308 decreases the current quantity to the measurement current value i1 and maintains the current quantity at this value while the analysis operation is executed. At time t5, the analysis operation ends, the automatic analyzer 100 transitions to the rack reception mode, and the light source 120 is also shifted to the idle state. As described above, in the rack reception mode immediately after the analysis, the automatic analyzer 100 is shiftable to the analytical state in a shorter period of time than that in the typical stand-by mode (sleep mode). Therefore, a higher current value (fourth current value) i4 than that of the typical idle state is supplied to the light source 120.

When the next analysis request is given at any time (in Fig. 7A, time t6) in a period designated in advance by the user from the transition to the rack reception mode, the automatic analyzer 100 rapidly transitions to the measurement mode. Accordingly, the current value to be supplied to the light source 120 is also changed to the measurement current value i1. On the other hand, when the next analysis request is not given in the period designated in advance by the user from the transition to the rack reception mode, the automatic analyzer 100 transitions to the typical stand-by mode (sleep mode), and the current value is also changed to the second current value i2 of the idle state accordingly.

Next, an overall change in the light quantity of the light source 120 of the automatic analyzer 100 according to the example will be described in detail using Fig. 7B. Fig. 7B is a graph illustrating a change in the light quantity from the power-OFF state of the automatic analyzer 100 according to the first example. In Fig. 7B, the vertical axis represents the light quantity L from the light source 120 measured by the optical detector 305, and the horizontal axis represents the time T. In addition, in Fig. 7B, a solid line represents a change when the light source is shifted to the idle state in advance before the start of the measurement as in the example, and a broken line represents a change when the power of the light source is turned off until the start of the measurement as a comparative example.

As illustrated in Fig. 7B, at the time t1 when the measurement current value i1 is supplied, the light quantity of the light source 120 gradually increases and reaches l1 that is the light quantity during the measurement. Next, at the time t2 when the initialize mode ends, the supply current value decreases to the second current value i2, and the light quantity also decreases to l2. This light quantity is maintained until the automatic analyzer 100 transitions from the stand-by mode to the measurement mode in response to the analysis request from the user. Next, at the time t3 when the automatic analyzer 100 is shifted to the measurement state, the third current value i3 higher than the measurement current value is supplied to the light source 120, and the light quantity increases to l3. As described above, by temporarily supplying the current quantity exceeding the measurement current value i1, the light quantity is stabilized. Next, at the time t4, the current value decreases to the measurement current value i1, the light quantity also changes to l1, and the light quantity is maintained during the analysis operation. At the time t5 when the analysis operation ends, when the rack reception mode is set, the supply current value decreases to the fourth current value i4, and the light quantity decreases to l4.

On the other hand, in the comparative example, when an analysis request is given at the time t3 and the current quantity of the measurement current value i1 is supplied, a longer period of time is required until the light quantity reaches the value l3 during the measurement as compared to the case of the example, and the light quantity cannot be stabilized until the shift to the analysis operation.

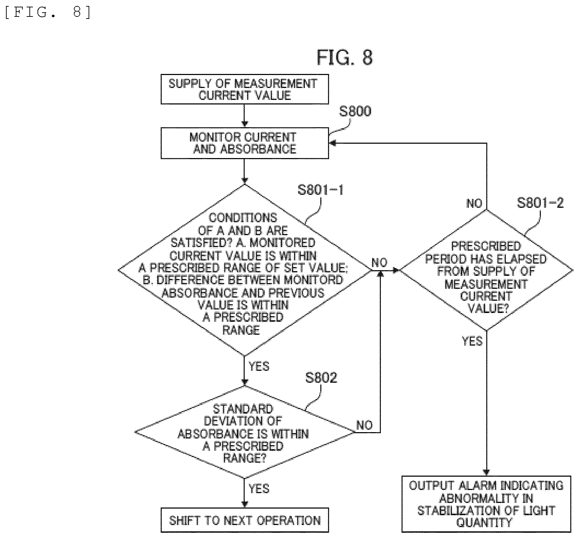

Next, the light quantity monitoring of the automatic analyzer 100 according to the example will be described using Fig. 8. Fig. 8 is a flowchart illustrating the process of the light quantity monitoring in the first example.

A period of time required to stabilize the light quantity of the light source 120 from the supply of the measurement current value varies depending on whether the light source 120 is in the idle state immediately before the measurement current is supplied, and also varies depending on an individual difference or the usage state of the light source 120. Accordingly, the control section 115 according to the example has a function of controlling the current detection section 307 and the absorbance calculation section 306 to check whether the light quantity from the light source 120 is stable.

Specifically, the current detection section 307 detects the current value of the light source 120 to monitor the current, and the absorbance calculation section 306 calculates the absorbance based on the light transmitted through the reaction cell 112 to monitor the absorbance. The control section 115 monitors whether there is abnormality in the stabilization of the light quantity using the current value detected by the current detection section 307 and the absorbance calculated by the absorbance calculation section 306.

As illustrated in Fig. 8, when the measurement current value is supplied to the light source 120, the current detection section 307 monitors the current, and the absorbance calculation section 306 monitors the absorbances at all of the wavelengths. The current value of the light source 120 detected by the current detection section 307 and the absorbance calculated by the absorbance calculation section 306 are transmitted to the control section 115.

The control section 115 determines whether the monitored value of the current is in a predetermined range from a set value of the current adjustment section 308 (for example, in ±1% of a set current value) and whether a difference between the monitored value and a previous value of the absorbance is in a predetermined range (Step S801-1). Here, as the previous value that is compared to the monitored value of the absorbance, the latest value of the absorbance calculated before shift from the measurement current value to another current value is used. For example, in the light quantity monitoring (Step S511 in Fig. 5) that is executed in the initialize mode, the final value of the cell blank value calculated before turning off the power of the automatic analyzer 100 is set as the previous value.

In Step S801-1, when both of the monitored value of the current and the monitored value of the absorbance satisfy the conditions, the control section 115 determines whether a standard deviation of the absorbances at all of the wavelengths during the cell blank measurement is in a predetermined range (Step S802).

In Step S802, when the standard deviation of the absorbances at all of the wavelengths during the cell blank measurement is in the predetermined range, a variation in absorbance is small. Therefore, when the automatic analyzer 100 is in the initialize mode, the control section 115 ends the initialize mode and transitions to the sleep mode. In addition, when the automatic analyzer 100 is executing the pre-analysis operation, the control section 115 ends the pre-analysis operation and starts the analysis operation.

On the other hand, when any of the monitored value of the current and the monitored value of the absorbance does not satisfy the conditions in Step S801-1 or when the standard deviation of the absorbances at all of the wavelengths during the cell blank measurement is not in the predetermined range in Step S802, the control section 115 determines whether a predetermined time elapses from the supply of the measurement current value (Step S801-2). In the initialize mode, a period of time required to stabilize the light quantity is longer than that during the shift from the idle state to the measurement state. Therefore, the predetermined time that is a threshold for the determination in Step S801-2 is set to be longer than that in the other periods.

When the conditions of Step S801-1 are not satisfied, the control section 115 returns to Step S800 and continues to monitor the current and to monitor the absorbance.

On the other hand, when the conditions of Step S801-1 are satisfied, the control section 115 determines that there is abnormality in the stabilization of the light source and causes the display section 124 to display a system alarm (Step S801-3).

Next, the lifetime monitoring of the automatic analyzer 100 according to the example will be described. The lifetime of the light source 120 is calculated based on a total period where the light source 120 is lighted at the measurement current value i1 in Fig. 7A. However, the current value supplied to the light source 120 is not always limited to the measurement current value i1, and it is desirable to consider a lighting period where the light source 120 is turned off or the current supply ratio in the idle state decreases. Accordingly, the control section 115 according to the example corrects the total lighting period in consideration of the period where the current quantity that is a value reduced from that in the measurement state is supplied to the light source 120 and the reduction ratio thereof. Therefore, the control section 115 records the period of time where the current is supplied to the light source 120 and the current quantity thereof. For example, when the light source 120 is in the idle state and the current quantity to be supplied to the light source 120 is decreased by 50%, the control section 115 records a period that is 50% of the actual lighting period as the corrected lighting period in consideration of the reduction ratio. The control section 115 estimates the lifetime of the light source 120 based on the recorded lighting period and causes the display section 124 to display the light source exchange period. As a result, the user can grasp a timing of providing an exchange service of the light source 120 that is difficult to operate.

### Second Example

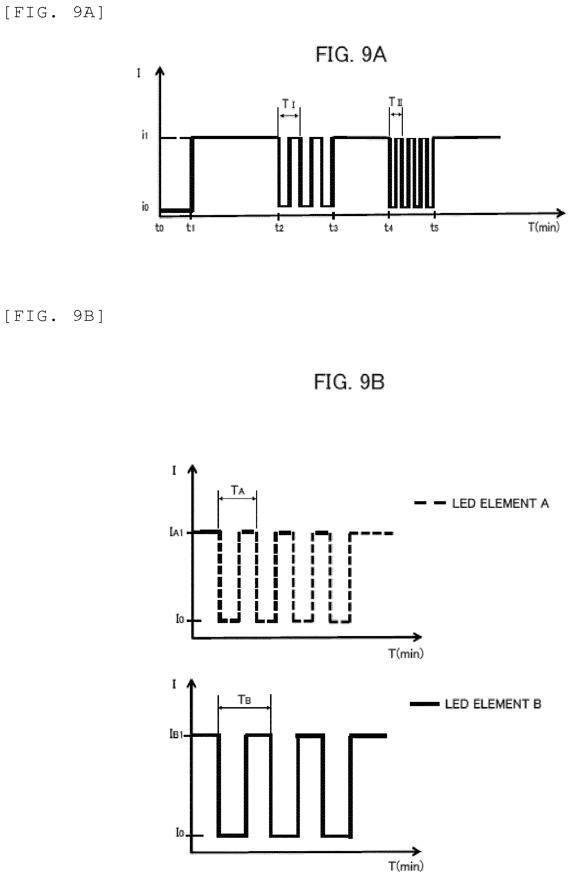

A second example is an example where, when the light source 120 is in the idle state, the current adjustment section 308 executes a pulse control (the measurement current value and an OFF-current value are alternately and repeatedly supplied). Fig. 9A is a graph illustrating a change in the current value to be supplied from the current adjustment section 308 according to the second example to the light source 120. In Fig. 9A, the vertical axis represents the current I to be supplied to the light source 120, and the horizontal axis represents the time T.

As illustrated in Fig. 9A, a time when the power of the automatic analyzer 100 is turned on is set to time t0. In a period from the time t0 to time t1, the light source 120 is in the OFF state, and the current value to be supplied to the light source 120 at this time is set to an OFF-current value i0. At the time t1 when the initialize mode starts, the current adjustment section 308 supplies the measurement current value i1 to the light source 120.

Next, at time t2 when the initialize mode ends, the control section 115 shifts the light source 120 to the idle state. When the light source 120 is in the idle state, the current adjustment section 308 executes a pulse control of alternately switching the current value to be supplied to the light source 120 between the OFF-current value i0 and the measurement current value i1. As described above, when the light source 120 is restored from the state where the light source 120 is completely turned off, a period of time of 5 minutes or longer is required. Therefore, as in the example, the pulse control prevents the light source 120 to enter the state where the light source 120 is completely turned off such that the restoration time can be reduced. In addition, the lifetime of the LED element depends on the temperature during operation, and as the temperature decreases, the lifetime increases. Accordingly, when the pulse control is executed, the OFF time of the light source 120 increases as compared to a case where the measurement current value is continuously supplied. Therefore, the temperature decreases, and the lifetime of the light source 120 can be increased. Further, when a pulse control where the OFF duration is longer than the ON duration is executed, the temperature further decreases as compared to a case where a pulse control where the OFF duration is the same as the ON duration is executed. Therefore, the lifetime of the light source 120 can be increased.

In addition, even in the pulse control where the OFF duration is the same as the ON duration, as the pulse period increases, the lifetime of the light source 120 can be increased. However, when the pulse period is long, a period of time required to stabilize the light quantity of the light source 120 increases. Accordingly, in the example, a period T_{I} of the pulse control is set to a value that is suitable for stabilizing the light quantity until the analysis and where the lifetime of the light source 120 can be increased as long as possible.

In a period from the time t2 to the time t3, the automatic analyzer 100 is in the sleep mode, and the current adjustment section 308 maintains the pulse control. Next, at the time t3, the automatic analyzer 100 transitions to the measurement mode. At this time, the current adjustment section 308 ends the pulse control and supplies the measurement current value i1 to the light source 120. Further, in a period from the time t3 to the time t4, the automatic analyzer 100 is in the measurement mode, and the current adjustment section 308 maintains the current value to be supplied to the light source 120 at the measurement current value i1.

At the time t4 when the measurement mode ends, when the rack reception mode is set, the control section 115 transitions to the rack reception mode, and the current adjustment section 308 starts the pulse control at a period T_{II}. As described above, in the rack reception mode, a period of time required for the transition to the measurement mode in response to the analysis request in the mode is shorter than that in the sleep mode. Accordingly, a period T_{II} is set to a value shorter than T_{I}. Between the rack reception mode and the sleep mode, the OFF duration of the pulse may be set to vary instead of setting the pulse period to vary.

Next, in a period from the time t4 to the time t5, the automatic analyzer 100 is in the rack reception mode, and the current adjustment section 308 maintains the pulse control. At the time t5 when the automatic analyzer 100 transitions from the rack reception mode to the measurement mode, the current adjustment section 308 ends the pulse control and supplies the measurement current value i1 to the light source 120.

By executing the pulse control as described above, even with the example, a reduction in the stabilization period of the light source 120 and an increase in the lifetime of the light source 120 can be simultaneously achieved. In addition, even with the control of the example, the light source 120 is caused to continuously emit light during the measurement without being caused to periodically emit light as in the first example. Therefore, the example is also applicable to an automatic analyzer where the photometry time is short, for example, a post-spectroscopic automatic analyzer where the reaction disc is rotated to process a large amount of samples.

Next, an example where a pulse control that varies depending on the LED elements configuring the light source 120 is executed will be described using Fig. 9B. Fig. 9B is a graph illustrating changes in the current values to be supplied from the current adjustment section 308 according to the second example to the LED elements A and B. In Fig. 9B, the vertical axis represents the current I to be supplied to the light source 120, and the horizontal axis represents the time T.

Two LED elements are present in the light source 120. In a LED element A, when a measurement current value is supplied from the power-OFF state, a period of time required to stabilize the light quantity during the measurement is longer than that of an LED element B. I_{A1} is a current value to be supplied from the current adjustment section 308 to the LED element A, and I_{B1} is a current value to be supplied from the current adjustment section 308 to the LED element B. When the light source 120 is in the idle state, the current adjustment section 308 executes the pulse control on the current to be supplied to each of the LED element A and the LED element B. A period of the pulse control to be executed on the LED element A is set to T_{A}, and a period of the pulse control to be executed on the LED element B is set to T_{B}. As described above, the stabilization period of the LED element A is longer than that of the LED element B. Accordingly, the period T_{A} is set to a value shorter than the period T_{B}. By executing the pulse control as described above, the two LED elements having different stabilization periods can be stabilized at the same time.

As described above, with the embodiment, a period of time required to stabilize the light quantity during the analysis can be reduced while increasing the lifetime of the light source. Further, the function of monitoring the light quantity can prevent measurement with an abnormal light quantity. In addition, by monitoring the lifetime of the light source depending on the usage state, an appropriate exchange service can be provided.

The present invention is not limited to the above-described embodiment and includes various modification examples. For example, the above-described embodiments have been described in detail in order to easily describe the present invention, and the present invention is not necessarily to include all the configurations described above. A part of the configuration of one embodiment can be replaced with the configuration of another embodiment. Further the configuration of another embodiment can be added to the configuration of one embodiment. Addition, deletion, and replacement of another configuration can be made for a part of the configuration each of the embodiments, limited only by the scope of the appended claims.

### Reference Signs List

101: transport line, 102: rotor, 103: reagent disc, 104: reaction disc, 105: dispensing mechanism, 106: stirring mechanism, 107: spectroscope, 108: reaction cell cleaning mechanism, 109: nozzle cleaning mechanism, 110: sample vessel, 111: sample rack, 112: reaction cell, 113: reagent vessel, 114: shield portion, 115: control section, 116: nozzle, 117: liquid level sensor, 118: arm, 119: motor for dispensing mechanism, 120: light source, 121: sample dispensing position, 122: reagent dispensing position, 123: input section, 124: display section, 201: loading/storage section, 202: ISE section, 203: sample transport section, 204: colorimetric analysis section, 303: reaction container, 304: diffraction grating, 305: optical detector, 306: absorbance calculation section, 307: current detection section, 308: current adjustment section

## Claims

1. An automatic analyzer (100), comprising:
a light source (120) with two or more LED elements each having a different wavelength;
an analysis section (204) for, in an analytical state, executing analysis based on light radiated to a reaction vessel (112); and
a current adjustment section (308) for adjusting quantity of current supplied to each of the LED elements, wherein the current adjustment section (308) reduces the quantity of current to each of the LED elements in a non-analytical state individually to be smaller than the quantity of current in the analytical state, wherein
modes of the non-analytical state include a first stand-by mode, and a second stand-by mode which is shiftable to the analytical state in a shorter period than a period taken in the first stand-by mode; and
the current adjustment section (308) is configured to make a reduction ratio of the quantity of current to the LED elements in the second stand-by mode smaller than a reduction ratio of the quantity of current to the LED elements in the first stand-by mode, wherein
the automatic analyzer further comprises
a cleaning mechanism (108) for cleaning the reaction vessel (112);
a reaction disc (104) for moving the reaction vessel (112) to a predetermined position while holding the reaction vessel (112); and
a dispensing mechanism (105) for dispensing a sample or a reagent, wherein:
in the first stand-by mode, the dispensing mechanism (105), the cleaning mechanism (108), and the reaction disc (104) are all stopped; and
in the second stand-by mode, the dispensing mechanism (105) is stopped while the cleaning mechanism (108) and the reaction disc (104) are not stopped.

2. The automatic analyzer (100) according to claim 1, wherein the current adjustment section (308) is configured to make a reduction ratio of the quantity of current to the LED element with shorter wavelength larger than a reduction ratio of the quantity of current to the LED element with longer wavelength.

3. The automatic analyzer (100) according to claim 1, wherein:
the automatic analyzer (100) is configured to be turned ON to be in an initialize mode, and to be brought into the analytical state via a stand-by mode; and
the current adjustment section (308) is configured to make the quantity of current to the LED elements in the initialize mode larger than the quantity of current to the LED elements in the stand-by mode.

4. The automatic analyzer (100) according to claim 3, wherein the current adjustment section (308) is configured to set the quantity of current to the LED elements in the initialize mode as the quantity of current in the analytical state.

5. The automatic analyzer (100) according to claim 3, wherein the current adjustment section (308) is configured to temporarily make the quantity of current to the LED elements larger than the quantity of current in the analytical state in a transitional stage from the stand-by mode to the analytical state.

6. The automatic analyzer (100) according to claim 1, further comprising:
a current detection section (307) for detecting a current value of the light source (120);
an absorbance calculation section (306) for calculating absorbance based on light which has transmitted the reaction vessel (112); and
a control section (115) for monitoring abnormality in stabilization of light quantity using the current value detected by the current detection section (307) and the absorbance calculated by the absorbance calculation section (306).

7. The automatic analyzer (100) according to claim 6, wherein
the automatic analyzer is configured that, if the current value detected by the current detection section (307) is not within a prescribed range of a set value of the current adjustment section (308) even after an elapse of a prescribed period from supply of the current quantity in the analytical state, or if a difference from a previous value of the absorbance calculated by the absorbance calculation section (306) is not within a prescribed range, the control section (115) is configured to output an alarm indicating abnormality in stabilization of the light quantity.

8. The automatic analyzer (100) according to claim 6, wherein the analyzer is configured that, if a standard deviation of the absorbance calculated by the absorbance calculation section (306) is not within a prescribed range even after an elapse of a prescribed period from supply of the current quantity in the analytical state, the control section (115) is configured to output an alarm indicating abnormality in stabilization of the light quantity.

9. The automatic analyzer (100) according to claim 1, further comprising:
a control section for estimating timing of exchanging the light source (120) in consideration of a period for which the current quantity corresponding to a value reduced to be smaller than the value in the analytical state is supplied to the LED element, and a reduction ratio of the current quantity; and
a display section (124) for displaying the timing of exchanging the light source (120), which has been estimated by the control section.

## Patentansprüche

1. Automatischer Analysator (100), der umfasst:
eine Lichtquelle (120) mit zwei oder mehr LED-Elementen, die jeweils eine andere Wellenlänge besitzen;
einen Analyseabschnitt (204), um in einem analytischen Zustand eine Analyse anhand von Licht, das auf einen Reaktionsbehälter (112) gestrahlt wird, auszuführen; und
einen Stromanpassungsabschnitt (308), um eine Stromstärke, die an jedes der LED-Elemente geliefert wird, anzupassen, wobei der Stromanpassungsabschnitt (308) die Stromstärke zu jedem der LED-Elemente in einem nicht analytischen Zustand individuell so verringert, dass er kleiner als die Stromstärke in dem analytischen Zustand ist, wobei
Betriebsarten des nicht analytischen Zustands eine erste Bereitschaftsbetriebsart und eine zweite Bereitschaftsbetriebsart, die in einer kürzeren Zeitspanne als eine Zeitspanne, die in der ersten Bereitschaftsbetriebsart beansprucht wird, zu dem analytischen Zustand verschoben werden kann, enthalten; und
der Stromanpassungsabschnitt (308) konfiguriert ist, zu veranlassen, dass ein Verringerungsverhältnis der Stromstärke zu den LED-Elementen in der zweiten Bereitschaftsbetriebsart kleiner als ein Verringerungsverhältnis der Stromstärke zu den LED-Elementen in der ersten Bereitschaftsbetriebsart ist, wobei
der automatische Analysator ferner umfasst:
einen Reinigungsmechanismus (108) zum Reinigen des Reaktionsbehälters (112);
eine Reaktionsscheibe (104) zum Bewegen des Reaktionsbehälters (112) zu einer vorbestimmten Position, während der Reaktionsbehälter (112) gehalten wird; und
einen Ausgabemechanismus (105) zum Ausgeben einer Probe oder eines Reagenz, wobei:
in der ersten Bereitschaftsbetriebsart der Ausgabemechanismus (105), der Reinigungsmechanismus (108) und die Reaktionsscheibe (104) alle angehalten werden; und
in der zweiten Bereitschaftsbetriebsart der Ausgabemechanismus (105) angehalten wird, während der Reinigungsmechanismus (108) und die Reaktionsscheibe (104) nicht angehalten werden.

2. Automatischer Analysator (100) nach Anspruch 1, wobei der Stromanpassungsabschnitt (308) konfiguriert ist, zu veranlassen, dass ein Verringerungsverhältnis der Stromstärke zu dem LED-Element mit einer kleinerer Wellenlänge größer als ein Verringerungsverhältnis der Stromstärke zu dem LED-Element mit größerer Wellenlänge ist.

3. Automatischer Analysator (100) nach Anspruch 1, wobei:
der automatische Analysator (100) konfiguriert ist, eingeschaltet zu werden, um in einer Initialisierungsbetriebsart zu sein und über eine Bereitschaftsbetriebsart in den analytischen Zustand gebracht zu werden; und
der Stromanpassungsabschnitt (308) konfiguriert ist, zu veranlassen, dass die Stromstärke zu den LED-Elementen in der Initialisierungsbetriebsart größer als die Stromstärke zu den LED-Elementen in der Bereitschaftsbetriebsart ist.

4. Automatischer Analysator (100) nach Anspruch 3, wobei der Stromanpassungsabschnitt (308) konfiguriert ist, die Stromstärke zu den LED-Elementen in der Initialisierungsbetriebsart als die Stromstärke in dem analytischen Zustand einzustellen.

5. Automatischer Analysator (100) nach Anspruch 3, wobei der Stromanpassungsabschnitt (308) konfiguriert ist, zu veranlassen, dass die Stromstärke zu den LED-Elementen in einer Übergangsstufe von der Bereitschaftsbetriebsart zu dem analytischen Zustand temporär größer als die Stromstärke in dem analytischen Zustand ist.

6. Automatischer Analysator (100) nach Anspruch 1, der ferner umfasst:
einen Stromdetektionsabschnitt (307) zum Detektieren eines Stromwerts der Lichtquelle (120);
einen Absorptionskoeffizienten-Berechnungsabschnitt (306) zum Berechnen eines Absorptionskoeffizienten anhand von Licht, das den Reaktionsbehälter (112) durchlaufen hat; und
einen Steuerabschnitt (115) zum Überwachen einer Unregelmäßigkeit in der Stabilisierung einer Lichtmenge unter Verwendung des durch den Stromdetektionsabschnitt (307) detektierten Stroms und des durch den Absorptionskoeffizienten-Berechnungsabschnitt (306) berechneten Absorptionskoeffizienten.

7. Automatischer Analysator (100) nach Anspruch 6, wobei
der automatische Analysator derart konfiguriert ist, dass dann, wenn der durch den Stromdetektionsabschnitt (307) detektierte Stromwert selbst nach Ablauf einer vorgeschriebenen Zeitspanne seit einer Zuführung der Stromstärke in dem analytischen Zustand nicht innerhalb eines vorgeschriebenen Bereichs eines Einstellwerts des Stromanpassungsabschnitts (308) liegt, oder dann, wenn ein Unterschied zu einem vorherigen Wert des durch den Absorptionskoeffizienten-Berechnungsabschnitt (306) berechneten Absorptionskoeffizienten nicht innerhalb eines vorgeschriebenen Bereichs liegt, der Steuerabschnitt (15) konfiguriert ist, einen Alarm auszugeben, der eine Unregelmäßigkeit in der Stabilisierung der Lichtmenge angibt.

8. Automatischer Analysator (100) nach Anspruch 6, wobei der Analysator so konfiguriert ist, dass dann, wenn eine Standardabweichung des durch den Absorptionskoeffizienten-Berechnungsabschnitt (306) berechneten Absorptionskoeffizienten selbst nach Ablauf einer vorgeschriebenen Zeitspanne seit der Zuführung der Stromstärke in dem analytischen Zustand nicht innerhalb eines vorgeschriebenen Bereichs liegt, der Steuerabschnitt (115) konfiguriert ist, einen Alarm auszugeben, der eine Unregelmäßigkeit in der Stabilisierung der Lichtmenge angibt.

9. Automatischer Analysator (100) nach Anspruch 1, der ferner umfasst:
einen Steuerabschnitt zum Schätzen eines Zeitpunkts des Austauschs der Lichtquelle (120) unter Berücksichtigung einer Zeitspanne, für die die Stromstärke, die einem Wert entspricht, der so verringert wurde, dass er kleiner als der Wert in dem analytischen Zustand ist, an das LED-Element geliefert wird, und eines Verringerungsverhältnisses der Stromstärke; und
einen Anzeigeabschnitt (124) zum Anzeigen des Zeitpunkts des Austauschs der Lichtquelle (120), der durch den Steuerabschnitt geschätzt wurde.

## Revendications

1. Analyseur automatique (100), comprenant :
une source de lumière (120) comportant deux ou plusieurs éléments à LED ayant chacun une longueur d'onde différente ;
une section d'analyse (204) destinée à, dans un état d'analyse, exécuter une analyse sur la base d'une lumière rayonnée vers un récipient de réaction (112) ; et
une section d'ajustement de courant (308) destinée à ajuster une quantité de courant alimentée à chacun des éléments à LED, la section d'ajustement de courant (308) réduisant la quantité de courant vers chacun des éléments à LED, dans un état de non-analyse, de manière individuelle pour qu'elle soit inférieure à la quantité de courant dans l'état d'analyse, dans lequel
des modes de l'état de non-analyse incluent un premier mode de veille et un deuxième mode de veille qui peut être décalé vers l'état d'analyse dans une période plus courte qu'une période considérée dans le premier mode de veille ; et
la section d'ajustement de courant (308) est configurée pour faire en sorte qu'un taux de réduction de la quantité de courant vers les éléments à LED, dans le deuxième mode de veille, soit inférieur à un taux de réduction de la quantité de courant vers les éléments à LED dans le premier mode de veille, dans lequel
l'analyseur automatique comprend en outre :
un mécanisme de nettoyage (108) destiné à nettoyer le récipient de réaction (112) ;
un disque de réaction (104) destiné à déplacer le récipient de réaction (112) jusqu'à une position prédéterminée tout en maintenant le récipient de réaction (112) ; et
un mécanisme de distribution (105) destiné à distribuer un échantillon ou un réactif, dans lequel :
dans le premier mode de veille, le mécanisme de distribution (105), le mécanisme de nettoyage (108) et le disque de réaction (104) sont tous arrêtés ; et
dans le deuxième mode de veille, le mécanisme de distribution (105) est arrêté tandis que le mécanisme de nettoyage (108) et le disque de réaction (104) ne sont pas arrêtés.

2. Analyseur automatique (100) selon la revendication 1, dans lequel la section d'ajustement de courant (308) est configurée pour faire en sorte qu'un taux de réduction de la quantité de courant vers l'élément à LED qui a une longueur d'onde plus courte soit supérieur à un taux de réduction de la quantité de courant vers l'élément à LED qui a une longueur d'onde plus longue.

3. Analyseur automatique (100) selon la revendication 1, dans lequel :
l'analyseur automatique (100) est configuré pour être mis en marche pour être dans un mode d'initialisation, et pour être amené dans l'état d'analyse via un mode de veille ; et
la section d'ajustement de courant (308) est configurée pour faire en sorte que la quantité de courant vers les éléments à LED dans le mode d'initialisation soit supérieure à la quantité de courant vers les éléments à LED dans le mode de veille.

4. Analyseur automatique (100) selon la revendication 3, dans lequel la section d'ajustement de courant (308) est configurée pour définir la quantité de courant vers les éléments à LED dans le mode d'initialisation comme étant la quantité de courant dans l'état d'analyse.

5. Analyseur automatique (100) selon la revendication 3, dans lequel la section d'ajustement de courant (308) est configurée pour faire en sorte que la quantité de courant vers les éléments à LED soit temporairement supérieure à la quantité de courant dans l'état d'analyse dans une phase de de transition depuis le mode de veille vers le mode d'analyse.

6. Analyseur automatique (100) selon la revendication 1, comprenant en outre :
une section de détection de courant (307) destinée à détecter une valeur de courant de la source de lumière (120) ;
une section de calcul d'absorbance (306) destinée à calculer une absorbance sur la base d'une lumière qui est passée à travers le récipient de réaction (112) ; et
une section de commande (115) destinée à surveiller une anomalie dans une stabilisation de quantité de lumière à l'aide de la valeur de courant détectée par la section de détection de courant (307) et de l'absorbance calculée par la section de calcul d'absorbance (306).

7. Analyseur automatique (100) selon la revendication 6, dans lequel
l'analyseur automatique est configuré en ce que, si la valeur de courant détectée par la section de détection de courant (307) n'est pas à l'intérieur d'une plage prescrite d'une valeur définie de la section d'ajustement de courant (308) même après écoulement d'une période prescrite depuis l'alimentation de la quantité de courant dans l'état d'analyse, ou si une différence par rapport à une précédente valeur de l'absorbance calculée par la section de calcul d'absorbance (306) n'est pas à l'intérieur d'une plage prescrite, la section de commande (115) est configurée pour sortir une alarme indiquant une anomalie dans une stabilisation de la quantité de lumière.

8. Analyseur automatique (100) selon la revendication 6, dans lequel l'analyseur est configuré en ce que, si un écart standard de l'absorbance calculée par la section de calcul d'absorbance (306) n'est pas à l'intérieur d'une plage prescrite même après écoulement d'une période prescrite depuis l'alimentation de la quantité de courant dans l'état d'analyse, la section de commande (115) est configurée pour sortir une alarme indiquant une anomalie dans une stabilisation de la quantité de lumière.

9. Analyseur automatique (100) selon la revendication 1, comprenant en outre :
une section de commande destinée à estimer une temporisation d'échange de la source de lumière (120) compte tenu d'une période pendant laquelle la quantité de courant, correspondant à une valeur réduite pour qu'elle soit inférieure à la valeur dans l'état d'analyse, est alimentée à l'élément à LED, et d'un taux de réduction de la quantité de courant ; et
une section d'affichage (124) destinée à afficher la temporisation d'échange de la source de lumière (120, qui a été estimée par la section de commande.
